# EUROPEAN PATENT SPECIFICATION

(11) **EP 3 962 029 B1**
(45) Date of publication and mention of the grant of the patent: **07.06.2023**
(21) Application number: 20192684.7
(22) Date of filing: 25.08.2020
(51) Int. Cl.: H04L 61/5014

(54) **APPARATUSES AND METHODS FOR ADAPTIVE NETWORK CONFIGURATION**
VORRICHTUNGEN UND VERFAHREN ZUR ADAPTIVEN NETZWERKKONFIGURATION
APPAREILS ET PROCÉDÉS DE CONFIGURATION DE RÉSEAU ADAPTATIVE

(43) Date of publication of application: 02.03.2022
(73) Proprietor: Moxa Inc., New Taipei City 242 (TW)
(72) Inventor: SHEN, Chun-Yi, New Taipei City (TW); CHANG, Tung-Tsai, New Taipei City (TW); CHEN, Yen-Ting, New Taipei City (TW)
(74) Representative: Straus, Alexander

(56) References cited:
- ALEXANDER SILICON GRAPHICS S ET AL: "DHCP Options and BOOTP Vendor Extensions; rfc2132.txt", DHCP OPTIONS AND BOOTP VENDOR EXTENSIONS; RFC2132.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 1997 (1997-03-01), XP015007916,

## Description

### BACKGROUND OF THE APPLICATION

### Field of the Application

The application generally relates to network management/configuration, and more particularly, to apparatuses and methods for adaptive network configuration.

### Description of the Related Art

For many operating environments, network deployment usually defines different subnets for separate spaces. For example, a rail transport system may include multiple trains, each associated with a subnet under the same local area network. Even though some or all of the train subnets may have the same network topology, the configuration of each train subnet may still require modifications of certain parameters to allow communications across subnets. In a common practice, the configuration modification is manually performed by a particular personnel, such as a train operator. However, the manual configuration is inefficient and time consuming. In addition, communication failure may occur due to errors of manual operation.
The Dynamic Host Configuration Protocol (DHCP) is used to provide a framework for passing configuration information to hosts on a TCP/IP network. Configuration parameters and other control information are carried in tagged data items that are stored in the 'options' field of the DHCP message. In a prior art - "DHCP Options and BOOTP Vendor Extensions", published by Steve Alexander from Silicon Graphics and Ralph Droms from Bucknell University, in the Internet Engineering Task Force (IETF), Standard Internet Society (ISOC) 4, on 1 March, 1997, specific DHCP options are proposed to be used as BOOTP vendor information extensions.

A solution is sought for improving the process of network configuration.

### BRIEF SUMMARY OF THE APPLICATION

The invention is set out in the appended set of claims. In order to solve the aforementioned problem, the present application proposes to reuse the configuration files of network devices from subnet to subnet. In particular, an inherited Internet Protocol (IP) mask is provided to each network device, enabling the network devices to automatically modify the IP addresses in the configuration files and to use the modified IP addresses for auto configuration.

In a first aspect of the application, an apparatus (e.g., a network device) disposed in a subnet is provided. The apparatus comprises a Network Communication Interface (NCI), a storage medium, and a controller. The NCI is configured to enable the apparatus to communicate with other apparatuses in the subnet. The storage medium is configured to store a configuration file associated with the apparatus, wherein the configuration file comprises a plurality of first IP addresses, each of which corresponds to a respective one of the apparatus and other apparatuses in the subnet. The controller is coupled to the storage medium and the NCI, and configured to perform the following: sending a Dynamic Host Configuration Protocol (DHCP) discover message to a DHCP server in the subnet via the NCI; receiving a DHCP offer message indicating a second IP address of the DHCP server and a predetermined IP mask (or called an inherited IP mask) from the DHCP server via the NCI in response to sending the DHCP discover message; modifying the first IP addresses in the configuration file based on the second IP address and the predetermined IP mask, by determining a portion of each of the first IP addresses based on the predetermined IP mask and replacing the portion of each of the first IP addresses with the corresponding portion of the second IP address; and using the modified first IP addresses to configure IP addresses of the apparatus and other apparatuses in the subnet via the NCI.

In an implementation form of the first aspect, the controller is further configured to perform the following: using the modified first IP addresses to communicate with other apparatuses in the subnet via the NCI.

In another implementation form of the first aspect in combination with the second implementation form of the first aspect, the corresponding portion of the second IP address is preconfigured based on an identification of the subnet.

In another implementation form of the first aspect, the subnet is installed on a train.

In another implementation form of the first aspect, the DHCP offer message comprises a DHCP option 224 for indicating the predetermined IP mask.

In another implementation form of the first aspect, the predetermined IP mask is set to "0.255.0.0".

In a second aspect of the application, a method, executed by an apparatus capable of communicating with other apparatuses in a subnet, is provided. The method comprises the following steps: sending a DHCP discover message to a DHCP server in the subnet; receiving a DHCP offer message indicating a second IP address of the DHCP server and a predetermined IP mask from the DHCP server in response to sending the DHCP discover message; modifying, based on the second IP address and the predetermined IP mask, a plurality of first IP addresses stored in a configuration file associated with the apparatus, wherein each of the first IP addresses corresponds to a respective one of the apparatus and other apparatuses in the subnet, wherein the modifying comprises: determining a portion of each of the first IP addresses based on the predetermined IP mask and replacing the portion of each of the first IP addresses with the corresponding portion of the second IP address; and using the modified first IP addresses to configure IP addresses of the apparatus and other apparatuses in the subnet.

In an implementation form of the second aspect, the method further comprises: using the modified first IP addresses to communicate with other apparatuses in the subnet.

In another implementation form of the second aspect in combination with the second implementation form of the second aspect, the corresponding portion of the second IP address is preconfigured based on an identification of the subnet.

In another implementation form of the second aspect, the subnet is installed on a train.

In another implementation form of the second aspect, the DHCP offer message comprises a DHCP option 224 for indicating the predetermined IP mask.

Other aspects and features of the present application will become apparent to those with ordinarily skill in the art upon review of the following descriptions of specific embodiments of the apparatuses and methods for adaptive network configuration.

### BRIEF DESCRIPTION OF DRAWINGS

The application can be more fully understood by reading the subsequent detailed description and examples with references made to the accompanying drawings, wherein:
Fig. 1 is a schematic diagram of a subnet environment according to an embodiment of the application;
Fig. 2 is a block diagram illustrating a network device according to an embodiment of the application;
Fig. 3 is a flow chart illustrating the method for adaptive network configuration according to an embodiment of the application;
Fig. 4 is a schematic diagram illustrating the adaptive network configuration according to an embodiment of the application; and
Fig. 5 is a message sequence chart illustrating the method for adaptive network configuration according to an embodiment of the application.

### DETAILED DESCRIPTION OF THE APPLICATION

The following description is made for the purpose of illustrating the general principles of the application and should not be taken in a limiting sense. It should be understood that the embodiments may be realized in software, hardware, firmware, or any combination thereof. The terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

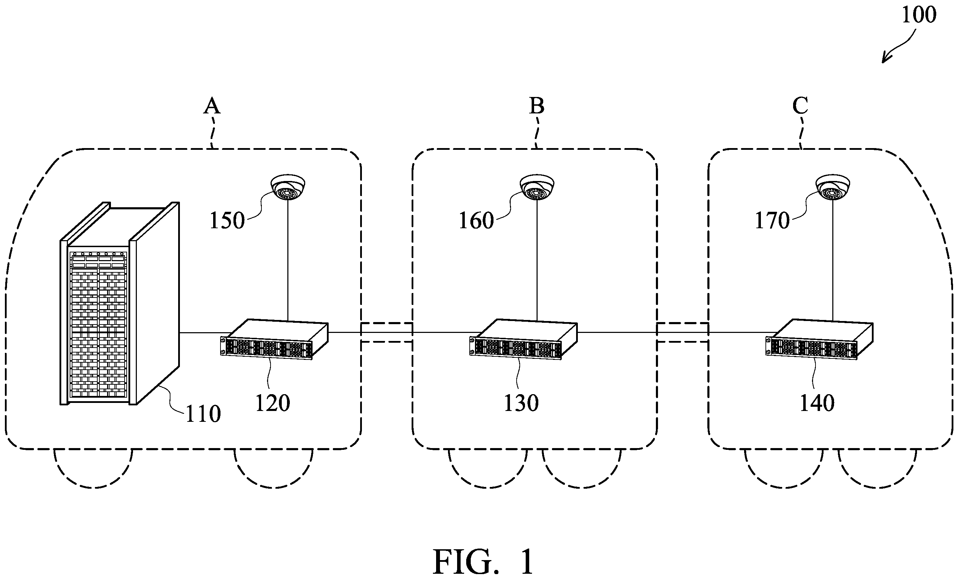

Fig. 1 is a schematic diagram of a subnet environment according to an embodiment of the application.

As shown in Fig. 1, the subnet 100 is installed on a train including 3 types of cars A, B, and C. For example, car A may be an Electric Motor Conductor (EMC), car B may be an Electric Trailer (ET), and car C may be an Electric Motor (EM).

The subnet 100 may a wired network (e.g., an Ethernet network) including a Central Control Unit (CCU) 110 and three network devices 120-140. In the subnet 100, only the network device 120 is connected to the CCU 110, and the network device 130 is connected to both the network devices 120 and 140, while the network devices 120 and 140 are not directly connected to each other.

In another embodiment, the subnet 100 may be a wireless network, such as a Wireless-Fidelity (Wi-Fi) network, a Bluetooth network, a Zigbee network, or a telecommunication network, which utilize mediums including, but not limited to, Radio Frequency (RF), Infrared (IR), and/or microwave.

The CCU 110 may be a server integrating a plurality of server/database functions. For example, the CCU 110 may be installed with at least a Dynamic Host Configuration Protocol (DHCP) server, a Secure Copy Protocol (SCP) server, and a configuration file database (DB).

The DHCP server is configured to dynamically allocate an IP address and other network configuration parameters to each network device on the subnet 100, thereby enabling the network devices 120-140 to communicate with each other using the allocated IP addresses.

The SCP server is configured to securely transfer configuration files between the configuration file DB and the network devices 120-140, and the configuration files are encrypted using the Secure Shell (SSH) protocol during the file transfer process.

The configuration file DB is configured to store separate configuration file for each of the network devices 120-140. The configuration file associated with a network device may include the IP address of the network device, the IP addresses of other network devices and/or terminal devices in the subnet 100 (e.g., the neighboring network devices and/or terminal devices, and various servers), and other configuration parameters (such as Simple Network Management Protocol (SNMP) configuration parameters, and/or Virtual Local Area Network (VLAN) configuration parameters, etc.) for the network device. The aforementioned configuration file is not part of the claimed invention or may not be encompassed by the appended claims but is useful for understanding/elaborating the present invention.

Although not shown, the local area network may include several subnets, each of which is installed on a respective train, and the configuration files stored in the configuration file DB may be reused from train to train. That is, the configuration file DB of each train may store the same configuration files.

Alternatively, the CCU 110 may be further installed with a Domain Name System (DNS) server, an SNMP trap server, a time server, a Terminal Access Controller Access-Control System (TACACS) server, a Remote Authentication Dial In User Service (RADIUS) server, a Simple Mail Transfer Protocol (SMTP) server, a Syslog server, or any combination thereof, and the application should not be limited thereto.

Each of the network devices 120-140 may be a switch, a router, or bridge which supports the function of packet routing. In particular, each of the network devices 120-140 supports the function of adaptive network configuration as disclosed in the present application. Each of the network devices 120-140 may connect with one or more terminal devices (such as a machinery, robotic arm, security camera, or conveyor). For example, each of the network devices 120-140 is connected with a respective one of the security cameras 150-170.

It should be understood that the components described in the embodiment of Fig. 1 are for illustrative purposes only and are not intended to limit the scope of the application. For example, the subnet 100 may be installed in a different environment, such as an office section, a floor of a building, or a chamber of a factory, and it may include fewer or more network devices and/or terminal devices.

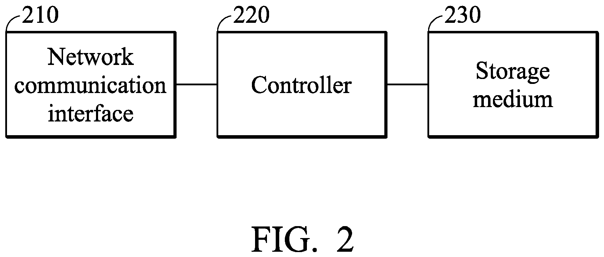

Fig. 2 is a block diagram illustrating a network device according to an embodiment of the application.

As shown in Fig. 2, a network device (e.g., the network device 120/130/140) may include a Network Communication Interface (NCI) 210, a controller 220, and a storage medium 230.

The NIC 210 is configured to enable the network device to communicate with other network devices and/or terminal devices in a subnet (e.g., the subnet 100). Specifically, the NIC 210 may include components such as a switching fabric, a plurality of ports, transmitters, receivers, transceivers, antennas, or the like, or any combination thereof.

The controller 220 may be a general-purpose processor, a Micro Control Unit (MCU), a Digital Signal Processor (DSP), or the like, which includes various circuits for providing the functions of data processing and computing, controlling the NIC 210 for communicating with other network devices and/or terminal devices, and storing and retrieving data (e.g., network topology information) to and from the storage medium 230.

In particular, the controller 220 coordinates the aforementioned operations of the NIC 210 and the storage medium 230 for performing the method for adaptive network configuration.

As will be appreciated by persons skilled in the art, the circuits of the controller 220 may include transistors that are configured in such a way as to control the operation of the circuits in accordance with the functions and operations described herein. As will be further appreciated, the specific structure or interconnections of the transistors may be determined by a compiler, such as a Register Transfer Language (RTL) compiler. RTL compilers may be operated by a processor upon scripts that closely resemble assembly language code, to compile the script into a form that is used for the layout or fabrication of the ultimate circuitry. Indeed, RTL is well known for its role and use in the facilitation of the design process of electronic and digital systems.

The storage medium 230 may be a non-transitory machine-readable storage medium, including a memory, such as a FLASH memory or a Non-Volatile Random Access Memory (NVRAM), or a magnetic storage device, such as a hard disk or a magnetic tape, or an optical disc, or any combination thereof for storing data (e.g., network topology information), instructions, and/or program code of applications, communication protocols, and/or the method of the present application.

It should be understood that the components described in the embodiment of Fig. 2 are for illustrative purposes only and are not intended to limit the scope of the application. For example, a network device may include more components, such as an Input/Output (I/O) device (e.g., one or more buttons, one or more light emitters, a speaker, a keyboard, a mouse, and/or a touch pad), and a display device (e.g., a Liquid-Crystal Display (LCD), a Light-Emitting Diode (LED) display, an Organic LED (OLED) display, or an Electronic Paper Display (EPD), etc.).

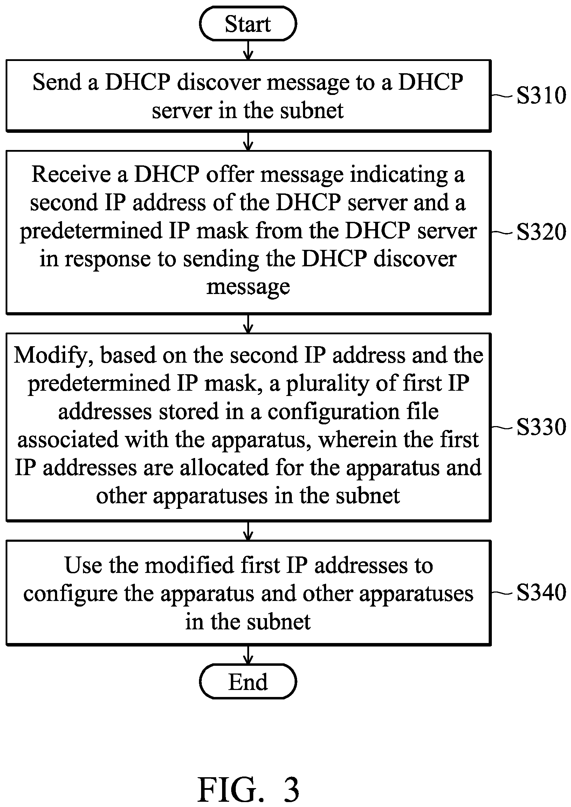

Fig. 3 is a flow chart illustrating the method for adaptive network configuration according to an embodiment of the application.

In this embodiment, the method for adaptive network configuration may be applied to and executed by a network device (e.g., the network device 120/130/140) disposed in a subnet (e.g., the subnet 100) of a local area network. For example, the local area network may be installed on a rail transport system which includes a plurality of trains, and each subnet of the local area network is installed on an individual train.

To begin with, the network device sends a Dynamic Host Configuration Protocol (DHCP) discover message to the DHCP server in the subnet (step S310).

In one embodiment, the DHCP discover message may be sent in response to the network device being reset or powered on.

Subsequent to step S310, the network device receives a DHCP offer message indicating a second IP address of the DHCP server and a predetermined IP mask (or called inherited IP mask) from the DHCP server in response to sending the DHCP discover message (step S320).

In one embodiment, the DHCP offer message may include a DHCP option (e.g., option 224 or any option reserved for private use) for indicating the predetermined IP mask. For example, the predetermined IP mask may be set to "0.255.0.0", if the second decimal digits of IP addresses are used for identifying different subnets in the same local area network.

Subsequent to step S320, the network device modifies, based on the second IP address and the predetermined IP mask, a plurality of first IP addresses stored in the configuration file associated with the apparatus, wherein the first IP addresses are allocated for the apparatus and other apparatuses in the subnet (step S330). The aforementioned feature "modifying first IP addresses" is not part of the claimed invention or may not be encompassed by the appended claims but is useful for understanding/elaborating the present invention.

Specifically, the first IP addresses stored in the configuration file associated with the network device (e.g., the network device 120) may include: 1) the IP address of the network device; 2) the IP addresses of the neighboring network devices (e.g., the network device 130) and terminal devices (e.g., the terminal device 150); and 3) the IP addresses of other functionality servers (e.g., DNS server, SNMP trap server, time server, TACACS server, RADIUS server, SMTP server, and/or Syslog server).

To further clarify, step S330 may be divided into two sub-steps as follows: determining a portion of each of the first IP addresses based on the predetermined IP mask; and replacing the portion of each of the first IP addresses with the corresponding portion of the second IP address.

For example, if the predetermined IP mask is "0.255.0.0", it means that the second decimal digits of the first IP addresses should be replaced with the second decimal digit of the second IP address.

Subsequent to step S330, the network device uses the modified first IP addresses to configure the network device and other apparatuses (e.g., other network devices and/or terminal devices) in the subnet (step S340), and the method ends.

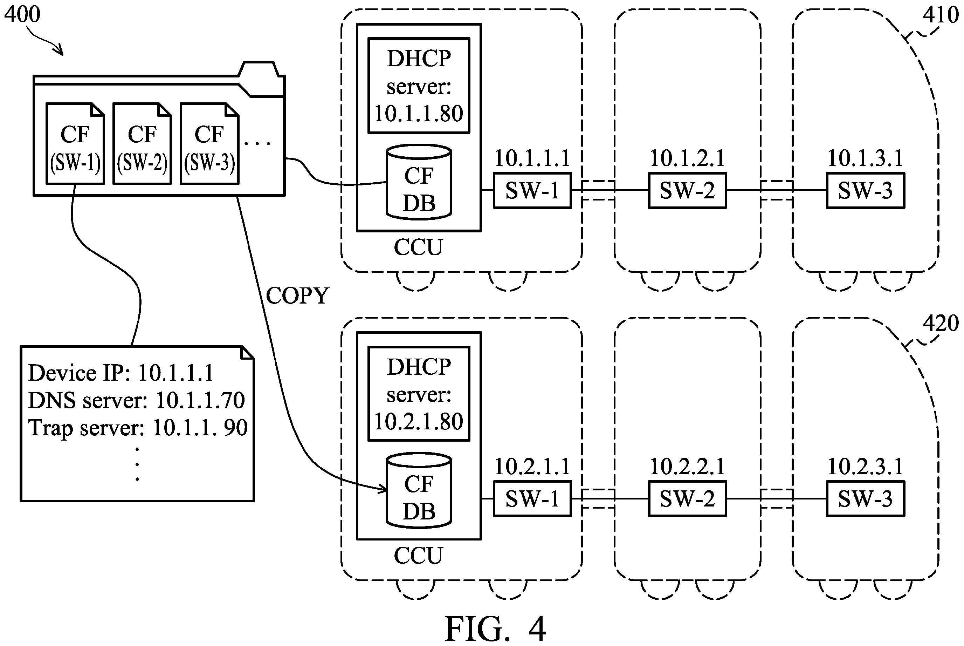

Fig. 4 is a schematic diagram illustrating the adaptive network configuration according to an embodiment of the application.

As shown in Fig. 4, there are two trains with the same network topology, and an individual subnet is installed on each train, wherein the subnets 410-420 belong to the same local area network.

Please note that the configuration files stored in the configuration file database (denoted as CF DB in Fig. 4) on the first train are copied to the configuration file database on the second train. That is, the configuration files of the switches on the first train are reused on the switches on the second train.

However, when reusing the configuration files, each switch on the second train will modify the IP addresses in the configuration file. For example, SW-1 on train 2 may reuse the configuration file of SW-1 on train 1, except that the IP addresses stored in the configuration file are modified based on the inherited IP mask and the IP address of the DHCP server on train 2.

For example, the second decimal digits of the IP addresses in the configuration file of SW-1 on train 2 are replaced with the second decimal digit of the IP address of the DHCP server on train 2. As shown in Fig. 4, the IP address of SW-1 is "10.1.1.1" in the configuration file, and it is changed to "10.2.1.1" when being used for configuring SW-1 on train 2.

In addition, the IP address of the DHCP server on each train may be preconfigured in a fashion that one of the decimal digit is set according to the subnet identification (ID) or train ID. For example, if the second decimal digit is selected, the IP address of the DHCP server on train 1 may be set to "10.1.1.80", while the IP address of the DHCP server on train 2 may be set to "10.2.1.80".

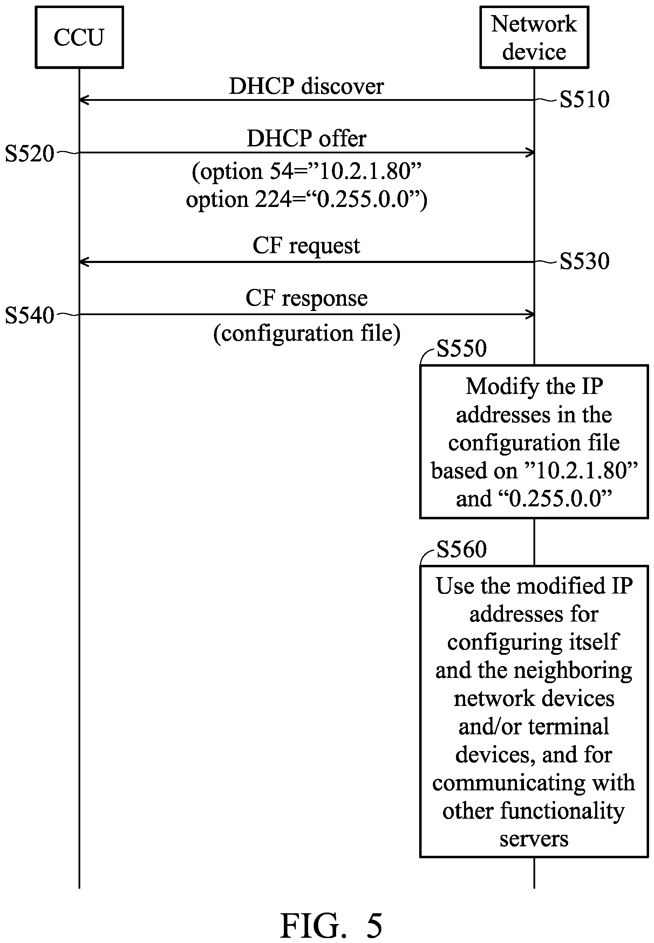

Fig. 5 is a message sequence chart illustrating the method for adaptive network configuration according to an embodiment of the application.

In step S510, the network device broadcasts a DHCP discover message.

In step S520, when receiving the DHCP discover message, the CCU replies to the network device with a broadcast/unicast DHCP offer message.

Specifically, the DHCP offer message includes the option 54 for indicating the IP address of the DHCP server installed on the CCU, and the option 224 for indicating the inherited IP mask.

In step S530, the network device requests the CCU for its configuration file.

In step S540, the CCU sends the configuration file to the network device.

Specifically, the configuration file is reused from another train having the same network topology as the train currently being configured.

In step S550, the network device modifies the IP addresses in the configuration file based on the IP address of the DHCP server and the inherited IP mask.

In step S560, the network device uses the modified IP addresses for configuring itself and the neighboring network devices and/or terminal devices, and for communicating with other functionality servers (e.g., DNS server, SNMP trap server, time server, TACACS server, RADIUS server, SMTP server, and/or Syslog server).

In view of the forgoing embodiments, it will be appreciated that the present application realizes automatic network configuration, by reusing the configuration files from subnet to subnet and providing an inherited IP mask to enable adaptive modification of the IP addresses in the configuration files. Advantageously, the efficiency and accuracy of network configuration are significantly improved.

Use of ordinal terms such as "first", "second", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

## Claims

1. An apparatus (120, 130, 140), disposed in a subnet (100), comprising:
a Network Communication Interface (210), NCI, configured to enable the apparatus (120, 130, 140) to communicate with other apparatuses in the subnet (100);
a storage medium (230), configured to store a configuration file associated with the apparatus (120, 130, 140), wherein the configuration file comprises a plurality of first Internet Protocol, IP, addresses, each of which corresponds to a respective one of the apparatus (120, 130, 140) and other apparatuses in the subnet (100); and
a controller (220), coupled to the storage medium (230) and the NCI (210), and configured to perform the following:
sending a Dynamic Host Configuration Protocol, DHCP, discover message to a DHCP server in the subnet (100) via the NCI (210);
receiving a DHCP offer message indicating a second IP address of the DHCP server and a predetermined Internet Protocol, IP, mask from the DHCP server via the NCI (210) in response to sending the DHCP discover message;
modifying the first IP addresses in the configuration file based on the second IP address and the predetermined IP mask, by determining a portion of each of the first IP addresses based on the predetermined IP mask and replacing the portion of each of the first IP addresses with the corresponding portion of the second IP address; and
using the modified first IP addresses to configure IP addresses of the apparatus (120, 130, 140) and other apparatuses in the subnet (100) via the NCI (210).

2. The apparatus (120, 130, 140) as claimed in claim 1, wherein the controller (220) is further configured to perform the following:
using the modified first IP addresses to communicate with other apparatuses in the subnet (100) via the NCI (210).

3. The apparatus (120, 130, 140) as claimed in claim 1, wherein the corresponding portion of the second IP address is preconfigured based on an identification of the subnet (100).

4. The apparatus (120, 130, 140) as claimed in claim 1, wherein the subnet (100) is installed on a train.

5. The apparatus (120, 130, 140) as claimed in claim 1, wherein the DHCP offer message comprises a DHCP option 224 for indicating the predetermined IP mask.

6. The apparatus (120, 130, 140) as claimed in claim 1, wherein the predetermined IP mask is set to "0.255.0.0".

7. A method, executed by an apparatus (120, 130, 140) capable of communicating with other apparatuses in a subnet (100), the method comprising:
sending (S310) a Dynamic Host Configuration Protocol, DHCP, discover message to a DHCP server in the subnet (100);
receiving (S320) a DHCP offer message indicating a second IP address of the DHCP server and a predetermined Internet Protocol, IP, mask from the DHCP server in response to sending the DHCP discover message;
modifying (S330), based on the second IP address and the predetermined IP mask, a plurality of first IP addresses stored in a configuration file associated with the apparatus (120, 130, 140), wherein each of the first IP addresses corresponds to a respective one of the apparatus (120, 130, 140) and other apparatuses in the subnet (100), wherein the modifying (S330) comprises: determining a portion of each of the first IP addresses based on the predetermined IP mask and replacing the portion of each of the first IP addresses with the corresponding portion of the second IP address; and using (S340) the modified first IP addresses to configure IP addresses of the apparatus (120, 130, 140) and other apparatuses in the subnet (100).

8. The method as claimed in claim 7, further comprising:
using the modified first IP addresses to communicate with other apparatuses in the subnet (100).

9. The method as claimed in claim 7, wherein the corresponding portion of the second IP address is preconfigured based on an identification of the subnet (100).

10. The method as claimed in claim 7, wherein the subnet (100) is installed on a train.

11. The method as claimed in claim 7, wherein the DHCP offer message comprises a DHCP option 224 for indicating the predetermined IP mask.

## Patentansprüche

1. Vorrichtung (120, 130, 140), die in einem Subnetz (100) angeordnet ist, welche umfasst:
eine Netzwerkkommunikationsschnittstelle (210), NCI, die ausgestaltet ist, die Vorrichtung (120, 130, 140) in die Lage zu versetzen, mit anderen Vorrichtungen in dem Subnetz (100) zu kommunizieren;
ein Speichermedium (230), das konfiguriert ist, eine der Vorrichtung (120, 130, 140) zugeordnete Konfigurationsdatei zu speichern, worin die Konfigurationsdatei mehrere erste Internetprotokoll-, IP, Adressen umfasst, von denen jede einer von der entsprechenden Vorrichtung (120, 130, 140) und anderen Vorrichtungen in dem Subnetz (100) entspricht; und
eine Steuerung (220), die mit dem Speichermedium (230) und der NCI (210) gekoppelt und konfiguriert ist, das folgende auszuführen:
Senden einer DHCP-Erkundungsnachricht (*Dynamic Host Configuration Protocol*) an einen DHCP-Server im Subnetz (100) über die NCI (210);
Empfangen einer DHCP-Angebotsnachricht, die eine zweite IP-Adresse des DHCP-Servers und eine bestimmte Internetprotokoll-IP-Maske angibt, von dem DHCP-Server über die NCI (210) als Reaktion auf das Senden der DHCP-Erkundungsnachricht;
Modifizieren der ersten IP-Adressen in der Konfigurationsdatei auf der Grundlage der zweiten IP-Adresse und der bestimmten IP-Maske, indem ein Teil jeder der ersten IP-Adressen auf der Grundlage der bestimmten IP-Maske bestimmt und der Teil jeder der ersten IP-Adressen durch den entsprechenden Teil der zweiten IP-Adresse ersetzt wird; und
Verwenden der modifizierten ersten IP-Adressen zum Konfigurieren von IP-Adressen der Vorrichtung (120, 130, 140) und anderer Vorrichtungen in dem Subnetz (100) über die NCI (210).

2. Vorrichtung (120, 130, 140) nach Anspruch 1, worin die Steuerung (220) ferner konfiguriert ist, das folgende auszuführen:
Verwendung der modifizierten ersten IP-Adressen zur Kommunikation mit anderen Vorrichtungen in dem Subnetz (100) über die NCI (210).

3. Vorrichtung (120, 130, 140) nach Anspruch 1, worin der entsprechende Teil der zweiten IP-Adresse auf der Grundlage einer Identifikation des Subnetzes (100) vorkonfiguriert ist.

4. Vorrichtung (120, 130, 140) nach Anspruch 1, worin das Subnetz (100) in einem Zug installiert ist.

5. Vorrichtung (120, 130, 140) nach Anspruch 1, wobei die DHCP-Angebotsnachricht eine DHCP-Option 224 zur Angabe der bestimmten IP-Maske umfasst.

6. Vorrichtung (120, 130, 140) nach Anspruch 1, worin die bestimmte IP-Maske auf "0.255.0.0" eingestellt ist.

7. Verfahren, das von einer Vorrichtung (120, 130, 140) ausgeführt wird, die geeignet ist, mit anderen Vorrichtungen in einem Subnetz (100) zu kommunizieren, wobei das Verfahren umfasst:
Senden (S310) einer DHCP-Erkundungsnachricht (*Dynamic Host Configuration Protocol*) an einen DHCP-Server in dem Subnetz (100);
Empfangen (S320) einer DHCP-Angebotsnachricht, die eine zweite IP-Adresse des DHCP-Servers und eine bestimmte Internetprotokoll-, IP, Maske angibt, von dem DHCP-Server als Reaktion auf das Senden der DHCP-Erkundungsnachricht;
Modifizieren (S330), basierend auf der zweiten IP-Adresse und der bestimmten IP-Maske, mehrerer erster IP-Adressen, die in einer Konfigurationsdatei gespeichert sind, die mit der Vorrichtung (120, 130, 140) assoziiert ist, worin jede der ersten IP-Adressen einer Vorrichtung von der entsprechenden Vorrichtung (120, 130, 140) und anderen Vorrichtungen in dem Subnetz (100) entspricht, wobei das Modifizieren (S330) umfasst: Bestimmen eines Teils jeder der ersten IP-Adressen basierend auf der bestimmten IP-Maske und Ersetzen des Teils jeder der ersten IP-Adressen durch den entsprechenden Teil der zweiten IP-Adresse; und
Verwenden (S340) der modifizierten ersten IP-Adressen zum Konfigurieren von IP-Adressen der Vorrichtung (120, 130, 140) und anderer Vorrichtungen in dem Subnetz (100).

8. Verfahren nach Anspruch 7, welches ferner umfasst:
Verwendung der modifizierten ersten IP-Adressen zur Kommunikation mit anderen Vorrichtungen in dem Subnetz (100).

9. Verfahren nach Anspruch 7, worin der entsprechende Teil der zweiten IP-Adresse auf der Grundlage einer Identifikation des Subnetzes (100) vorkonfiguriert ist.

10. Verfahren nach Anspruch 7, wobei das Subnetz (100) in einem Zug installiert ist.

11. Verfahren nach Anspruch 7, wobei die DHCP-Angebotsnachricht eine DHCP-Option 224 zur Angabe der bestimmten IP-Maske umfasst.

## Revendications

1. Appareil (120, 130, 140), disposé dans un sous-réseau (100), comprenant:
une interface de communication réseau (210), NCI, configurée pour permettre à l'appareil (120, 130, 140) de communiquer avec d'autres appareils dans le sous-réseau (100);
un support de stockage (230), configuré pour stocker un fichier de configuration associé à l'appareil (120, 130, 140), dans lequel le fichier de configuration comprend une pluralité de premières adresses protocol Internet, IP, chacune correspondant à une adresse respective de l'appareil (120, 130, 140) et d'autres appareils dans le sous-réseau (100); et
un contrôleur (220), couplé au support de stockage (230) et au NCI (210), et configuré pour effectuer ce qui suit:
envoyer un message de découverte DHCP (*Dynamic Host Configuration Protocol)* à un serveur DHCP dans le sous-réseau (100) via le NCI (210);
recevoir un message d'offre DHCP indiquant une deuxième adresse IP du serveur DHCP et un masque de protocole Internet, IP, prédéterminé du serveur DHCP via le NCI (210) en réponse à envoyer du message de découverte DHCP;
modifier les premières adresses IP dans le fichier de configuration en fonction de la deuxième adresse IP et du masque IP prédéterminé, en déterminant une partie de chacune des premières adresses IP en fonction du masque IP prédéterminé et en remplaçant la partie de chacune des premières adresses IP par la partie correspondante de la deuxième adresse IP; et
utiliser les premières adresses IP modifiées pour configurer les adresses IP de l'appareil (120, 130, 140) et d'autres appareils dans le sous-réseau (100) via le NCI (210).

2. Appareil (120, 130, 140) selon la revendication 1, dans lequel le contrôleur (220) est en outre configuré pour effectuer ce qui suit:
utiliser les premières adresses IP modifiées pour communiquer avec d'autres appareils du sous-réseau (100) via le NCI (210).

3. Appareil (120, 130, 140) selon la revendication 1, dans lequel la partie correspondante de la deuxième adresse IP est préconfigurée sur la base d'une identification du sous-réseau (100).

4. Appareil (120, 130, 140) selon la revendication 1, dans lequel le sous-réseau (100) est installé dans un train.

5. Appareil (120, 130, 140) selon la revendication 1, dans lequel le message d'offre DHCP comprend une option DHCP 224 pour indiquer le masque IP prédéterminé.

6. Appareil (120, 130, 140) selon la revendication 1, dans lequel le masque IP prédéterminé est fixé à "0.255.0.0".

7. Procédé exécutée par un appareil (120, 130, 140) capable de communiquer avec d'autres appareils dans un sous-réseau (100), le procédé comprenant:
envoyer (S310) un message de découverte DHCP (*Dynamic Host Configuration Protocol)* à un serveur DHCP dans le sous-réseau (100);
recevoir (S320) un message d'offre DHCP indiquant une deuxième adresse IP du serveur DHCP et un masque de protocole Internet, IP, prédéterminé du serveur DHCP en réponse à envoyer du message de découverte DHCP;
modifier (S330), en fonction de la deuxième adresse IP et du masque IP prédéterminé, une pluralité de premières adresses IP stockées dans un fichier de configuration associé à l'appareil (120, 130, 140), chacune des premières adresses IP correspondant à un appareil respectif (120, 130, 140) et à d'autres appareils dans le sous-réseau (100), la modification (S330) consistant à: déterminer une partie de chacune des premières adresses IP sur la base du masque IP prédéterminé et remplacer la partie de chacune des premières adresses IP par la partie correspondante de la deuxième adresse IP; et
utiliser (S340) les premières adresses IP modifiées pour configurer les adresses IP de l'appareil (120, 130, 140) et d'autres appareils dans le sous-réseau (100).

8. Procédé selon la revendication 7, comprenant en outre:
utiliser les premières adresses IP modifiées pour communiquer avec d'autres appareils du sous-réseau (100).

9. Procédé selon la revendication 7, dans lequel la partie correspondante de la deuxième adresse IP est préconfigurée sur la base d'une identification du sous-réseau (100).

10. Procédé selon la revendication 7, dans lequel le sous-réseau (100) est installé dans un train.

11. Procédé selon la revendication 7, dans lequel le message d'offre DHCP comprend une option DHCP 224 pour indiquer le masque IP prédéterminé.
